## Europäisches Patentamt
### European Patent Office
### Office européen des brevets

(19)

(11) Numéro de publication: **0 233 098 B1**

(12)
# FASCICULE DE BREVET EUROPEEN

(45) Date de publication du fascicule du brevet:
**26.07.89**

(51) Int. Cl.⁴: **B65G 67/20**

(21) Numéro de dépôt: **87400047.4**

(22) Date de dépôt: **12.01.87**

(54) **Dispositif de transfert de chargement, en particulier pour le transfert rapide de charges palettisées.**

(30) Priorité: **14.01.86 FR 8600435**

(43) Date de publication de la demande:
**19.08.87 Bulletin 87/34**

(45) Mention de la délivrance du brevet:
**26.07.89 Bulletin 89/30**

(84) Etats contractants désignés:
**AT BE CH DE ES FR GB GR IT LI LU NL SE**

(56) Documents cités:
**FR-A- 2 128 281**
**US-A- 3 727 777**

(73) Titulaire: **UNISABI SA, B.P. 7, F-45550 Saint-Denis de l'Hotel(FR)**

(72) Inventeur: **Ravez, Pierre, 12, rue du Champ Rond, F-45000 Orleans(FR)**
Inventeur: **Thole, André, 26, rue du Civet, F-45150 Jargeau(FR)**

(74) Mandataire: **Ahner, Francis et al, CABINET REGIMBEAU 26, avenue Kléber, F-75116 Paris(FR)**

## Description

La présente invention concerne le domaine du transfert de chargement, en particulier le transfert rapide de charges palettisées transportées à bord de véhicules routiers.

Les exigences dans le domaine du transfert de charges palettisées, c'est-à-dire empilées sur un plateau usuellement en bois et dénommé palette, sont de plus en plus grandes : les opérations de chargement et de déchargement doivent être réalisées dans des temps de plus en plus courts, tout en concernant un poids important de charges transférées (15 à 20 tonnes par exemple). De plus, autant pour écourter les opérations que pour éviter le danger inhérent à la manipulation rapide de charges lourdes concentrées sur une palette, on cherche à développer des dispositifs de transfert permettant de réaliser automatiquement la plus grande partie des opérations de chargement et de déchargement.

Les dispositifs connus, développés pour des performances élevées en ce sens, comprennent habituellement une superstructure allongée disposée sur une plate-forme de manutention de charge, ladite superstructure s'étendant dans la direction générale du transfert et supportant un ensemble mobile présentant une pluralité de dents sensiblement parallèles à ladite direction, et des moyens de levage pour lever ou abaisser lesdites dents par rapport à la superstructure de façon que celles-ci assurent le transfert rapide du chargement grâce à des moyens de roulement associés.

Une bonne illustration de tels dispositifs est donnée dans la demande de brevet européen N° 0 103 999 ou dans le brevet français N° 2 219 094.

D'une façon générale, il est prévu des équipements de guidage sur le plateau sur lequel ou duquel les charges sont transférées : dans la demande européenne précitée, le plancher du véhicule présente des pistes longitudinales au niveau desquelles coulissent les dents de l'ensemble mobile, tandis que dans le brevet français précité, une disposition analogue est prévue pour le fond d'un conteneur, avec des parties saillantes définies par une section de plancher en créneau.

Avec de tels dispositifs, il est en effet nécessaire de guider les charges palettisées dans le véhicule ou le conteneur au cours des opérations de transfert, et plus spécialement lors du chargement. En effet, le véhicule n'est jamais directement disposé avec une position parfaite d'alignement par rapport au dispositif de transfert ; de ce fait, la course de transfert devenant de plus en plus grande (une quinzaine de mètres par exemple), un faible désalignement pourrait avoir des conséquences très néfastes pour le chargement, et on ne peut courir ce risque si on veut automatiser les opérations de transfert.

La présence de tels équipements de guidage présente naturellement plusieurs inconvénients : il faut adapter les équipements à chaque type de véhicule, ou alors prévoir ces équipements à la fabrication, ce qui rend difficile, voire même exclut totalement, l'emploi de véhicules ou conteneurs banalisés, c'est-à-dire à fond normalement plat.

Le brevet américain N° 3 727 777 décrit un dispositif de transfert de chargement comprenant un ensemble roulant, se déplaçant sur une superstructure mobile ; la superstructure repose sur deux rails transversaux par l'intermédiaire de quatre roues disposées aux coins de la superstructure. Deux embrayages électriques permettent un mouvement individuel pour l'une ou l'autre de deux paires de roues, ce qui permet un léger centrage de la superstructure par rapport au véhicule. Cependant, la composante longidutinale des efforts est appliquée directement sur les arbres des roues, ce qui limite considérablement l'intérêt pratique du système.

D'autres tentatives ont été faites pour faciliter les opérations de saisie, utilisant des structures formant poutre flexible, avec des éléments roulants accouplés et des moyens de levage pneumatiques ; un dispositif de ce type est par exemple illustré dans le brevet français N° 2 043 818. Cependant, le maintien latéral et la précision de l'alignement rendent ce genre d'équipement impropre au transfert rapide de charges palettisées relativement lourdes.

Le brevet français N° 2 128 281 décrit un système pour desservir automatiquement des rayons de rangement. Des émetteurs de signaux, coopérant avec une surface associée, permettent de positionner correctement la plaque porteuse. Ce document est intéressant pour illustrer un positionnement automatique permettant d'automatiser des opérations de transfert de chargement, mais il ne contient aucun enseignement pour réaliser un transfert rapide de charges avec une superstructure allongée, disposée sur une plate-forme de manutention de charge et supportant un ensemble mobile à dents.

L'invention a principalement pour objet de proposer un dispositif de transfert permettant de s'affranchir de la nécessité de prévoir des équipements de guidage sur le plancher de la structure de transport (véhicule routier, conteneur, etc...), de façon à pouvoir utiliser des structures totalement banalisées.

Un autre objet de l'invention est de réaliser un dispositif dont les performances sont élevées, tant pour la durée des opérations de chargement et de déchargement, que pour la capacité en poids des charges à transférer.

Un autre objet de l'invention est de permettre, grâce à des possibilités de réglage multiples, une adaptabilité à des types très divers de véhicules, sans grever le temps des opérations de transfert par un temps de manoeuvre important pour le conducteur, avec de toute façon une précision qui reste limitée, lors d'une telle manoeuvre.

Un autre objet de l'invention est de réaliser un dispositif qui peut être aisément équipé d'une commande automatique.

Il s'agit plus particulièrement d'un dispositif de transfert de chargement, en particulier pour le transfert rapide de charges palettisées transportées à bord de véhicules routiers, comprenant une superstructure allongée disposée sur une plate-forme de manutention de charge, ladite superstructure s'étendant dans la direction générale du transfert et supportant un ensemble mobile présentant une pluralité de dents sensiblement parallèles à ladite direction, lesdites dents assurant le transfert rapide du chargement grâce à des moyens de roulement associés, caractérisé par le fait qu'il comporte en outre des moyens de visée portés par la superstructure, permettant de contrôler l'alignement de ladite structure par rapport au véhicule, des moyens de réglage disposés au voisinage de chaque extrémité de la superstructure, permettant de corriger l'alignement de ladite superstructure avec un déplacement latéral de celle-ci par rapport à la plate-forme de manutention de charge, et un moyen de liaison entre la superstructure et la plate-forme de manutention de charge comprenant un pivot et un organe transversal de guidage associé, ledit moyen de liaison autorisant un déplacement transversal de la superstructure et/ou une rotation possible dans son plan, lesdits moyens de visée, de réglage et de liaison assurant un positionnement précis des charges transférées sans nécessité de prévoir un quelconque équipement de guidage sur le plancher du véhicule.

De préférence, les moyens de visée comportent au moins un organe émettant un rayon lumineux, de préférence un organe laser, et des oeilletons de visée avant et arrière associés, permettant de situer la trace du rayon sur le fond du véhicule ; en particulier, le dispositif peut comporter un portique avant et arrière, monté à chaque extrémité de la superstructure, et portant au voisinage de leurs angles supérieurs les moyens de visée permettant un double repérage, avec deux rouleaux latéraux au niveau du portique avant, dont l'écartement est prévu pour éventuellement recentrer les charges palettisées au passage dudit portique.

Conformément à un dispositif simple et fiable, les moyens de réglage permettant de corriger l'alignement de la superstructure sont essentiellement constitués par deux vérins latéraux, disposés d'un côté de la superstructure, au voisinage de chaque extrémité de celle-ci ; en particulier, le corps de chaque vérin est articulé sur une semelle fixée à la plate-forme de manutention de charge, l'axe d'articulation étant essentiellement vertical, la tige dudit vérin étant connectée à la superstructure.

De préférence, le pivot est monté dans une zone centrale sous la superstructure -respectivement sur la plate-forme de manutention de charge-, ledit pivot pouvant se déplacer dans une cornière transversale fixée sur ladite plate-forme -respectivement sous ladite superstructure-, ledit pivot assurant ainsi un blocage longitudinal tout en autorisant les degrés de liberté en translation latérale, rotation et élévation verticale ; en variante, le pivot est télescopique, avec un déploiement dans une direction essentiellement verticale.

En vue d'améliorer encore l'adaptabilité et la précision des opérations, il est particulièrement avantageux que le dispositif comporte également des moyens de réglage disposés sensiblement au niveau de la périphérie de la superstructure, permettant un réglage en hauteur de ladite superstructure par rapport au plancher du véhicule avec un déplacement essentiellement vertical de celle-ci par rapport à la plate-forme de manutention de charge, avec eventuellement une superstructure intermédiaire porteuse, disposée sous la superstructure allongée et au niveau de laquelle sont répartis les points d'application des moyens de réglage en hauteur ; de préférence, les moyens de réglage en hauteur sont des vérins hydrauliques télescopiques, ou des vérins à vis commandés électriquement.

En vue d'une bonne cohérence associée à un guidage correct, des moyens de verrouillage sont prévus au voisinage des extrémités avant de certaines au moins des dents de l'ensemble mobile, permettant de relier entre elles deux extrémités adjacentes ; en particulier, ces moyens de verrouillage sont des crochets articulés, commandés de préférence au moyen de vérins hydrauliques, et les crochets sont mobiles dans un plan essentiellement parallèle à la superstructure, et réalisent un verrouillage des dents par paires.

De préférence, des galets de roulement sont montés sous la superstructure -respectivement sur la plate-forme de manutention de charge-, lesdits galets roulant sur des pistes d'appui rigides transversales prévues sur ladite plate-forme -respectivement sous ladite superstructure.

Il est également intéressant que le dispositif comporte un hayon monté pivotant à l'avant de la superstructure, servant de plateau de transition avec le plancher du véhicule.

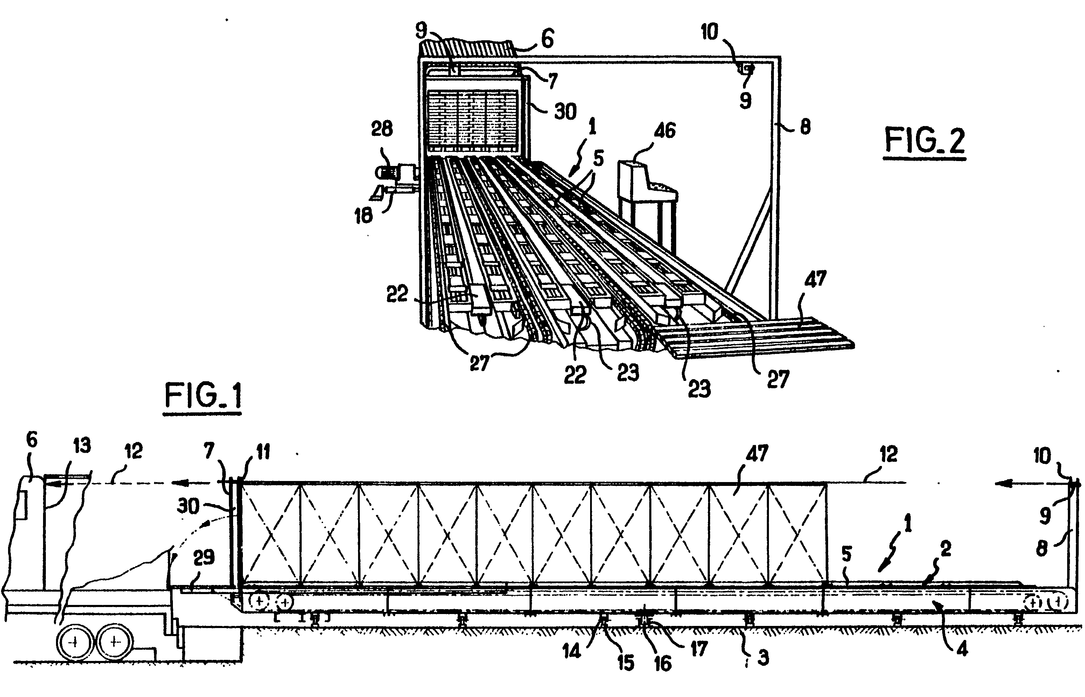

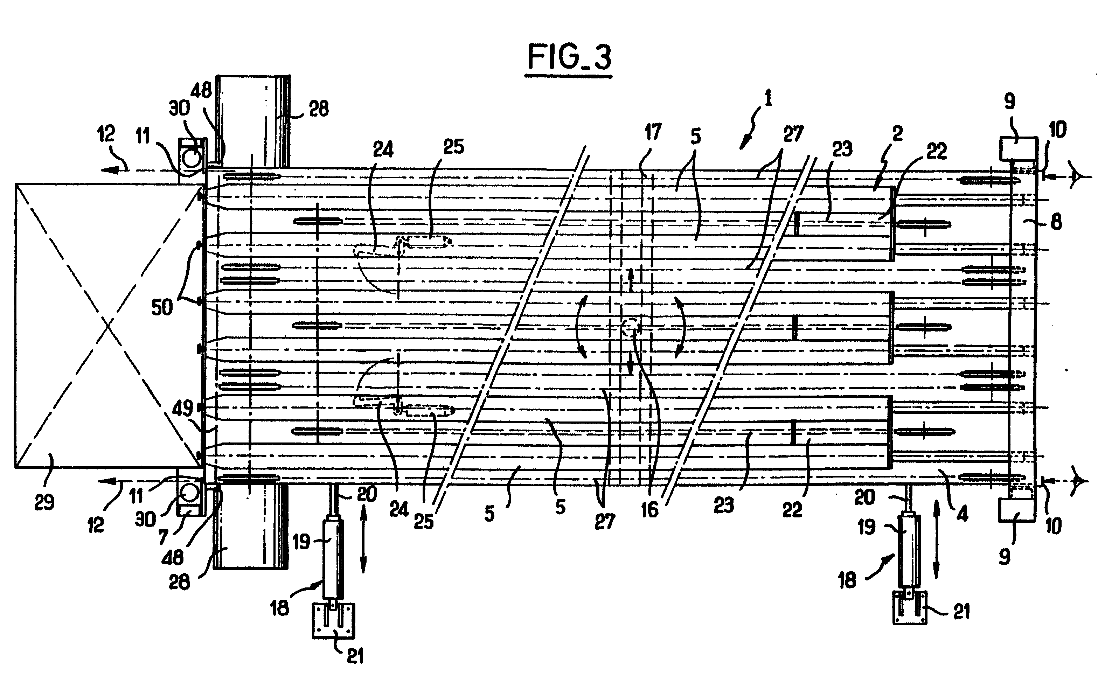

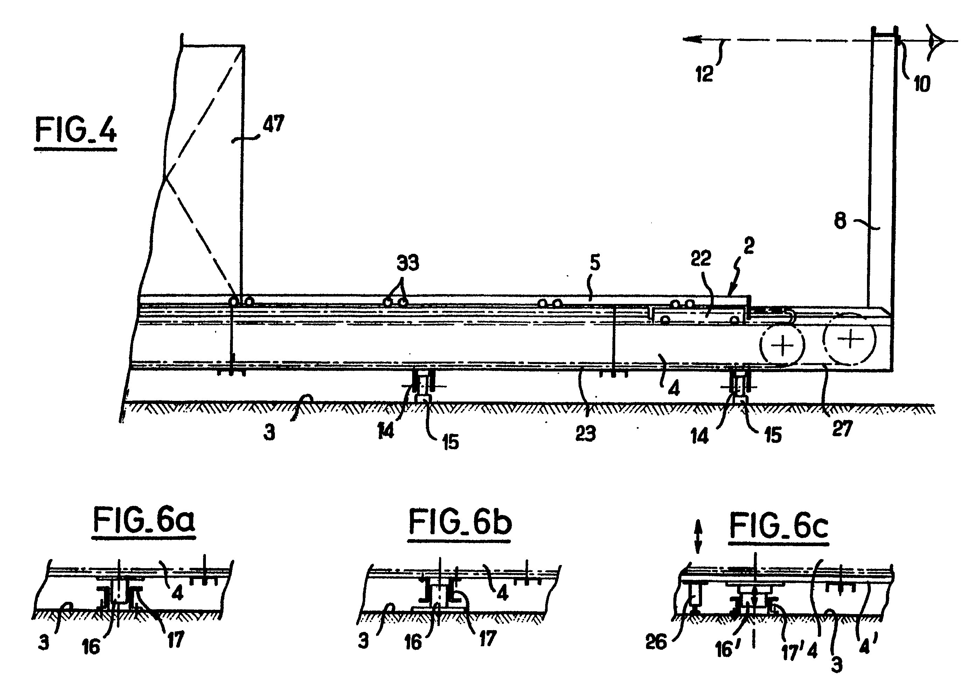

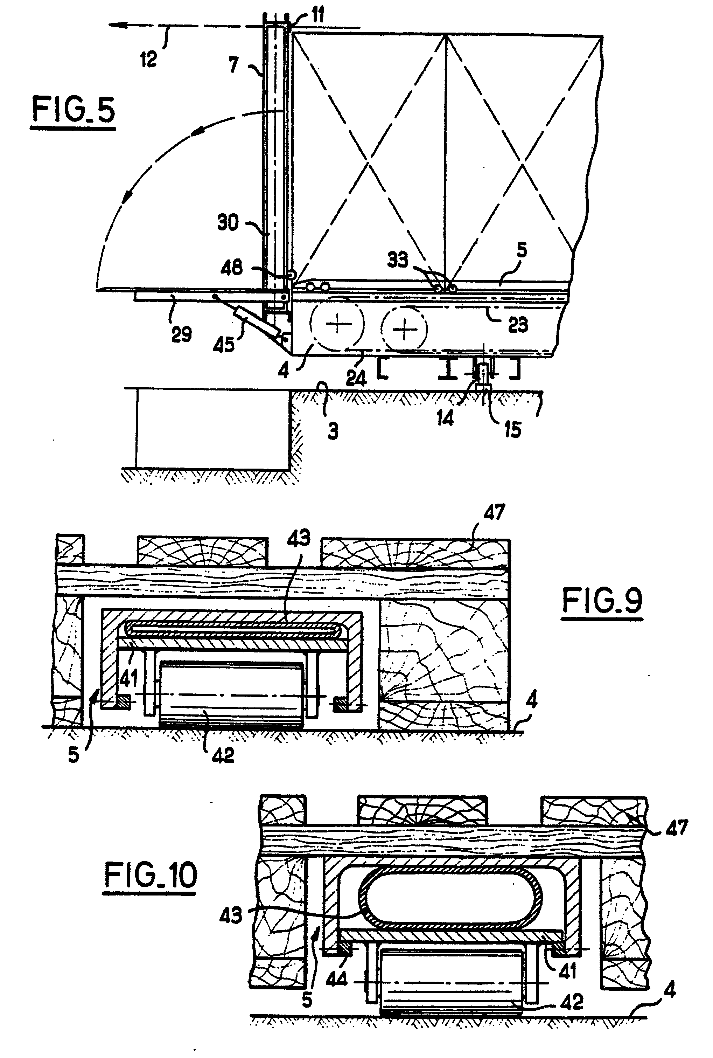

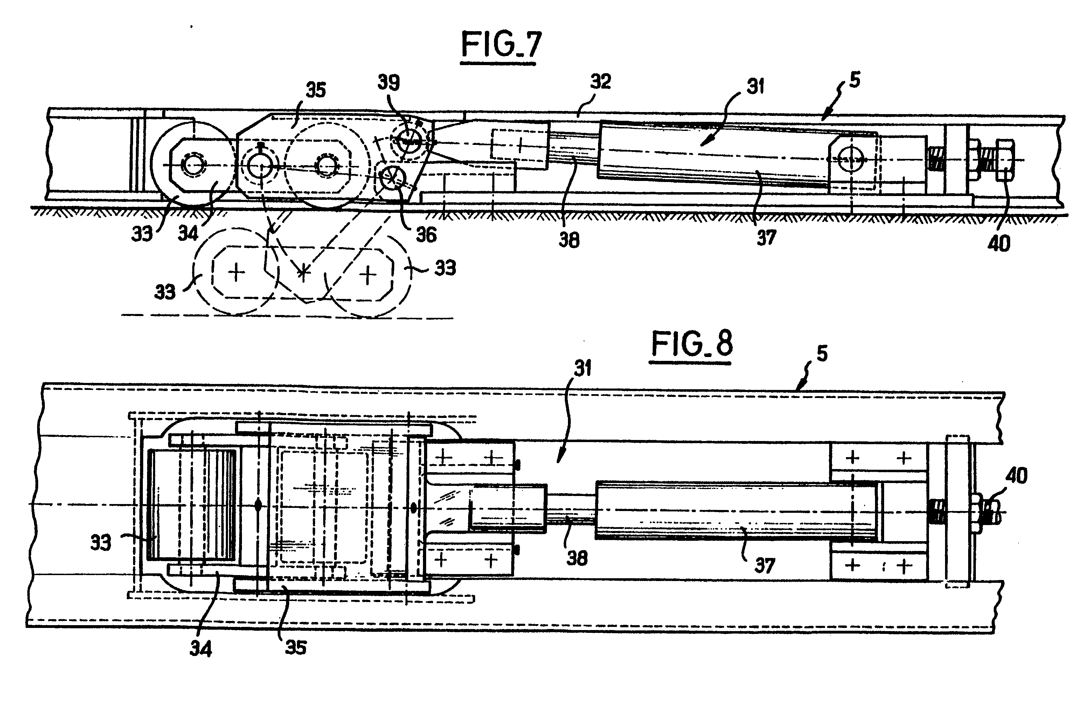

D'autres caractéristiques et avantages de l'invention apparaîtront plus clairement à la lumière de la description qui va suivre et du dessin annexé, concernant un mode de réalisation particulier, en référence aux figures, où : -la figure 1 est une vue en plan d'un dispositif de transfert conforme à l'invention, avec des charges palettisées prêtes au chargement sur un véhicule routier schématisé, -la figure 2 illustre en perspective une opération de chargement avec le dispositif de la figure 1, lequel est vu de l'arrière, -la figure 3 est une vue de dessus du dispositif de la figure 1, -les figures 4 et 5 sont des vues en plan du dispositif, à une échelle agrandie, concernant respectivement les parties arrière et avant, -les figures 6a, 6b, 6c représentent différents modes de réalisation d'un pivot central, la figure 6c illustrant schématiquement le cas d'une superstructure porteuse intermédiaire associée à des vérins permettant un réglage en hauteur. -les figures 7 et 8 sont des vues partielles d'une dent de l'ensemble mobile, respectivement en plan et de dessus, équipée de moyens de levage articulés commandés hydrauliquement, -les figures 9 et 10 illustrent en coupe transversale une autre variante de dent, dans laquelle les moyens de levage sont des moyens gonflables.

Les figures 1 et 2 illustrent la structure générale d'un dispositif de transfert de chargement conforme à l'invention, visant plus particulièrement le transfert rapide des charges palettisées transportées à bord de véhicules routiers. Il est à noter que le transport routier n'est mentionné ici que comme exemple, et que l'invention pourra trouver également une application pour le chargement à l'intérieur de conteneurs, ainsi qu'à bord d'autres moyens de transport, tels que le transport ferroviaire, maritime, aérien.

Le dispositif de transfert 1 comprend une superstructure allongée 4 disposée sur une plate-forme 3, dite plate-forme de chargement ou de manutention de charge. Cette superstructure allongée s'étend dans la direction générale du transfert, et supporte un ensemble mobile 2 présentant une pluralité de dents 5 sensiblement parallèles à la direction de transfert ; des moyens de levage, pour lesquels il sera revenu plus loin, sont prévus pour lever ou abaisser lesdites dents par rapport à la superstructure, de façon que celle-ci assurent le transfert rapide du chargement, grâce à des moyens de roulement associés.

Conformément à un aspect essentiel de l'invention, le dispositif de transfert 1 comporte des moyens de visée portés par la superstructure 4, permettant de contrôler l'alignement de ladite superstructure par rapport à un véhicule 6 amené par l'arrière au voisinage de la plate-forme de manutention de charge ; le dispositif comporte également des moyens de réglage disposés au voisinage de chaque extrémité de la superstructure 4, permettant de corriger l'alignement de ladite superstructure avec un déplacement latéral de celle-ci par rapport à la plate-forme de manutention de charge, ainsi qu'un moyen de liaison entre la superstructure et la plate-forme, ledit moyen de liaison autorisant un déplacement transversal de la superstructure et/ou une rotation possible dans son plan.

Avant même de décrire plus en détail ces moyens de visée, de réglage, et de liaison, il apparaît dès maintenant très clair que ces différents moyens peuvent assurer un positionnement précis des charges transférées, sans nécessité de prévoir un quelconque équipement de guidage sur le plancher du véhicule : ceci permet donc d'utiliser des structures de transport totalement banalisées, et en particulier des véhicules routiers dont le plancher supportant les charges présente une structure plate classique.

On se référera utilement aux figures 3 à 5 et 6a, qui illustrent à plus grande échelle la structure des moyens de visée, de réglage et de liaison centrale que l'on va maintenant décrire plus en détail.

Les moyens de visée comportent au moins un organe émettant un rayon lumineux, et on utilisera de préférence un organe laser. Deux portiques 7 et 8 sont ici montés sur la superstructure 4, respectivement à l'avant et à l'arrière de celle-ci, de façon en particulier à supporter les moyens de visée : un laser de positionnement 9 est ainsi prévu en partie haute du portique arrière 8, au voisinage de chaque angle de celui-ci, et des oeilletons de visée arrière 10 et avant 11 permettent de situer la trace du rayon lumineux 12 sur le fond du véhicule 13. Cette disposition permet ainsi un double repérage garantissant un alignement parfait du dispositif de transport par rapport à la direction longitudinale du véhicule. Il est naturellement possible d'utiliser d'autres types de moyens de visée, mais la préférence va au laser de positionnement, pour sa précision et sa facilité d'utilisation.

Lorsque l'on détecte un alignement incorrect de la superstructure à l'aide des moyens de visée précédents, il est donc nécessaire de pouvoir effectuer la correction nécessaire avant de procéder aux opérations de chargement ou de déchargement.

A cet effet, la superstructure 4, reposant sur la plate-forme 3 par l'intermédiaire de galets 14 roulant sur des pistes d'appui rigides associées 15 prévues transversalement sur ladite plate-forme, présente de ce fait une certaine liberté de débattement transversal. Il va de soi que les galets de roulement pourraient être montés sur la plate-forme 3, et les pistes d'appui rigides sur la superstructure 4, selon un montage du type plateau à billes.

Cependant, les degrés de liberté de la superstructure 4 par rapport à la plate-forme 3 sont limités par la présence d'un moyen de liaison qui est ici un pivot central 16 monté sous la superstructure, ledit pivot pouvant se déplacer dans une cornière transversale 17 fixée sur la plate-forme, de façon à assurer ainsi un blocage longitudinal de la superstructure, tout en autorisant les degrés de liberté en translation latérale, rotation dans son plan, et élévation verticale. Là encore, une disposition inversée pourrait être prévue, en montant le pivot sur la plate-forme et en fixant la cornière de guidage sous la superstructure, ainsi que cela est illustré à la figure 6b, la figure 6a correspondant à la variante représentée aux autres figures. Selon une autre variante possible, on pourrait prévoir un pivot disposé à l'avant de la superstructure et reçu dans un logement associé en vue d'une rotation de la superstructure dans son plan sans déplacement transversal de celle-ci.

Les moyens de réglage permettant de corriger l'alignement de la superstructure par rapport au véhicule, mieux visibles sur la figure 3, sont ici essentiellement constitués par deux vérins latéraux 18, disposés d'un côté de la superstructure, au voisinage de chaque extrémité de celle-ci. De préférence, le corps 19 de chaque vérin est articulé sur une semelle 21 fixée sur la plate-forme de manutention de charge, l'axe d'articulation étant essentiellement vertical, la tige 20 dudit vérin étant connectée à la superstructure en un point disposé à la partie inférieure de celle-ci (non visible).

Lorsque l'on procède au réglage de l'alignement de la superstructure, en s'aidant des moyens de visée précités, la composante longitudinale des efforts appliqués est reprise grâce à la butée du pivot central 16 contre l'une ou l'autre des deux faces de la cornière transversale 17, et ce dans toutes les positions de la superstructure, ce qui permet un réglage particulièrement fin de l'alignement par la seule commande des deux vérins de positionnement latéraux 18. Cette possibilité de réglage transversal, contrôlée à l'aide des moyens de visée, présente dans la pratique des avantages considérables : le chauffeur du véhicule peut en effet reculer l'engin avec une précision moyenne, l'alignement nécessaire étant alors rattrapé par la correction de la position relative de la superstructure par rapport au véhicule, cet alignement étant naturellement une condition nécessaire au bon déroulement des opérations de chargement et de déchargement.

Le principe d'utilisation d'un ensemble mobile à dents étant relativement classique dans le domaine du transfert de chargement, on ne fera que rappeler brièvement ses éléments constitutifs. Les dents de transfert 5 sont agencées comme des fourches, avec un chariot arrière d'entraînement 22 pouvant rouler sur une piste associée de la superstructure 4, l'entraînement étant assuré au moyen d'une chaîne associée 23, avec de préférence un montage sur un arbre transversal commun. Les dents 5 sont pourvues, tout au long de leur longueur, de moyens de roulement permettant leur déplacement aisé sur la superstructure, dans une direction parallèle à celle du transfert de chargement. Ces moyens de roulement sont en général associés à des moyens de levage permettant de lever ou d'abaisser les dents, ainsi que cela sera décrit plus loin en regard des figures 7 à 10.

Par ailleurs, des moyens de verrouillage sont avantageusement prévus au voisinage des extrémités avant de certaines au moins des dents de l'ensemble mobile, de façon à relier entre elles deux extrémités adjacentes desdites dents. Ce verrouillage, assurant une parfaite cohérence d'ensemble et un guidage correct en avant des dents, est ici assuré par des crochets articulés 24, de préférence commandés au moyen de vérins hydrauliques à double effet 25. Ces crochets sont disposés en dessous des dents, et sont mobiles dans un plan essentiellement parallèle à la superstructure, ce qui évite tout risque de butée de ces organes entre une partie de la superstructure lors des opérations de transfert. Un contacteur électrique sera de préférence prévu pour permettre une indication au niveau d'une console centrale de commande 46 (figure 2) que le verrouillage des dents est effectivement réalisé.

Il est également possible de prévoir un réglage supplémentaire de la position de la superstructure, en prévoyant des moyens de réglage disposés sensiblement au niveau de la périphérie de celle-ci, permettant un réglage en hauteur de ladite superstructure par rapport au plancher du véhicule, avec un déplacement essentiellement vertical par rapport à la plate-forme de manutention de charge. Compte tenu de la masse importante à soulever, on utilisera des vérins hydrauliques télescopiques, de préférence à des vérins à vis commandés électriquement; dans la pratique, on prévoira alors une superstructure intermédiaire porteuse 4' disposée sous la superstructure allongée 4, et au niveau de laquelle sont répartis les points d'application des moyens de réglage en hauteur 26, ainsi que cela est illustré sur la figure 6c, laquelle montre également une variante possible de pivot central 16' qui peut être télescopique, avec un déploiement dans une direction essentiellement verticale, et avec une extrémité active se déplaçant librement dans une cornière transversale 17' (déplacement en translation transversale et en élévation verticale). Il sera par exemple prévu deux vérins avant et deux vérins arrière, avec une commande synchronisée des deux paires, permettant un réglage aisé de l'inclinaison longitudinale de la superstructure, la plage angulaire concernée étant de l'ordre de quelques degrés.

Le déplacement des charges palettisées sur la superstructure, au-dessus des dents 5, est assuré de façon tout à fait classique au moyen de chaînes 27 arrangées latéralement de chaque côté des paires de dents, l'entraînement des chaînes 27 étant assuré par un groupe de commande 28 agissant sur un arbre commun à toutes les chaînes 27. On distingue ainsi sur la figure 3 six chaînes de manutention 27, et trois chaînes d'entraînement des chariots associés aux dents 23. Sur la figure 3 seulement, on a indiqué la présence de contacteurs de fin de course 50 disposés à l'extrémité avant de chacune des dents ; ces contacteurs permettent d'arrêter immédiatement la progression des dents, ce qui est aussi une sécurité supplémentaire dans le cas où une personne se trouverait par inadvertance sur le plancher du véhicule lors d'un chargement.

Chacune des dents 5 comporte avantageusement des moyens de levage répartis sur leur longueur, l'amplitude de ces moyens étant telle qu'en position basse les dents passent librement sous les palettes entre les plots extrêmes de celles-ci, alors qu'en position haute les palettes sont soulevées pour leur transfert, au-dessus de leurs chaînes d'entraînement associées 27.

Les figures 7 et 8 illustrent un premier type de moyen de levage pouvant équiper les dents 5 (ce type correspond à celui partiellement visible dans la vue en perspective de la figure 2).

Une succession d'ensembles de levage 31 est ainsi disposée à l'intérieur d'un profilé principal 32 constituant la structure extérieure des dents. Chaque ensemble 31 comporte une paire de galets 33 dont la platine support 34 est montée oscillante sur un châssis 35, lui-même articulé, directement ou indirectement, sur le profilé principal 32 (axe 36), un vérin 37, de préférence hydraulique, commande le basculement du châssis 35 par l'intermédiaire de sa tige 38 articulée sur ledit châssis (axe 39), la position du corps du vérin 37 à l'intérieur de la dent pouvant elle-même être ajustée par des moyens de réglage 40, ce qui permet un réglage précis de l'amplitude du mouvement d'oscillation de la platine porte-galets entre ses positions haute et basse. Les canalisations associées à ce vérin passent à l'intérieur du profilé, et sont par exemple fixées au niveau du chariot d'entraînement concerné ; la prise d'alimentation sera par exemple disposée dans une zone médiane de la superstructure (non représentée).

Une variante plus simple est illustrée aux figures 9 et 10 : ici, chaque platine 41 supportant les galets 42 peut coulisser librement à l'intérieur du profilé principal constituant la dent 5. Un élément tubulaire gonflable 43, par exemple en caoutchouc toilé, commande le levage ou l'abaissement de la dent ; on observera la présence de butées 44 portées par le profilé principal, limitant l'extension maximale du mouvement de levage.

Ces moyens de levage et de roulement associés à chacune des dents ne constituent qu'un équipement du dispositif de transfert de l'invention, et il va de soi que l'on pourrait adopter d'autres techniques existantes. En particulier, on pourrait prévoir des dents à niveau constant, sans les moyens de levage précités, auquel cas il sera par exemple prévu des galets répartis longitudinalement le long des dents et pouvant présenter une position haute ou une position basse grâce à un système de cames.

Pour compléter l'équipement du dispositif de l'invention, il est prévu à l'avant de la superstructure 4 un hayon pivotant 29, dont le mouvement est commandé au moyen d'un vérin 45 ; ce hayon sert de plateau de transition avec le plancher du véhicule pour toutes les opérations de transfert. Il est également prévu deux rouleaux 30, d'axe essentiellement vertical, disposés le long des montants du portique avant 7 ; l'entraxe des rouleaux 30 est choisi de telle façon qu'un éventuel recentrage des charges palettisées soit effectué lors du passage de celles-ci au niveau du portique avant 7. On notera que les figures 3 et 5 la présence, en partie basse du portique avant 7, d'une cellule photoélectrique 48 qui permet d'arrêter la progression des charges palettisées dès la coupure du rayon 49.

Le dispositif de transfert de l'invention permet de réaliser aisément une commande automatisée des différentes opérations de chargement ou de déchargement. La console de commande 46 permet à l'opérateur de surveiller le bon déroulement de ces opérations, tout en restant en dehors de la zone de transfert rapide des charges.

Après la mise en place d'un véhicule à charger ou décharger, l'alignement de la superstructure 4 est contrôlé avec les moyens de visée, et éventuellement corrigé grâce aux vérins latéraux 18, réglage éventuellement complété par une mise au niveau de la superstructure lorsque des moyens tels que des vérins 26 sont prévus. On réalisera par ailleurs le verrouillage des paires de dents entre elles par l'intermédiaire des crochets associés, cette opération étant avantageusement mise en oeuvre simultanément aux opérations d'élévation ou de descente des charges palettisées, ce qui permet d'utiliser la même commande hydraulique.

Pour le chargement, les charges 47 sont amenées successivement sur la superstructure, celles-ci sont entraînées par les chaînes associées en direction du portique avant 7, et leur progression est automatiquement stoppée à la coupure du rayon 49 de la cellule photoélectrique 48 ; on procède alors au relevage simultané de toutes les dents et au verrouillage des dents, l'avancement de l'ensemble mobile réalisant ensuite en une seule passe le chargement nécessaire, puis les dents sont reculées, après avoir été abaissées et déverrouillées. Pour le déchargement, on procède de façon inverse, en commençant par la vérification et l'éventuel réglage latéral et en hauteur de la superstructure, après quoi les dents sont avancées sous les palettes à décharger, puis relevées et verrouillées, et le déchargement est alors effectué en une passe.

A titre indicatif, un dispositif de transfert de chargement conforme à l'invention permet de réaliser le transfert automatisé de vingt-quatre palettes pesant une tonne chacune, ou de trente palettes de 500 kg, avec une durée inférieure à 3 mn. Ce transfert est réalisé en toute sécurité, bien que le véhicule ne soit pas muni d'équipement de guidage, comme c'était toujours le cas pour les dispositifs de transfert connus. L'opérateur peut surveiller les opérations de transfert de la console centrale de commande, sur laquelle les indications des différentes commandes permettent de s'assurer à tout moment du bon déroulement des opérations.

L'invention n'est pas limitée au mode de réalisation qui vient d'être décrit, mais englobe toute variante reprenant avec des moyens équivalents les caractéristiques essentielles figurant aux revendications.

En particulier, en ce qui concerne le moyen de liaison, l'emplacement de ce moyen pourra ne pas être obligatoirement au centre de la superstructure, mais par exemple plus ou moins décalé en direction de l'une ou l'autre des extrémités de la superstructure. De même, les moyens de réglage pourront comporter un arrangement différent de vérins latéraux ou d'organes équivalents.

## Revendications

1. Dispositif de transfert de chargement, en particulier pour le transfert rapide de charges palettisées transportées à bord de véhicules routiers, comprenant une superstructure allongée (4) disposée sur une plate-forme de manutention de charge (3), ladite superstructure s'étendant dans la direction générale du transfert et supportant un ensemble mobile présentant une pluralité de dents sensiblement parallèles à ladite direction, lesdites dents assurant le transfert rapide du chargement grâce à des moyens de roulement associés, caractérisé par le fait qu'il comporte en outre des moyens de visée (9, 10, 11) portés par la superstructure (4), permettant de contrôler l'alignement de ladite superstructure par rapport au véhicule, des moyens de réglage (18) disposés au voisinage de chaque extrémité de la superstructure, permettant de corriger l'alignement de ladite superstructure avec un déplacement latéral de celle-ci par rapport à la plate-forme de manutention de charge (3), et un moyen de liaison entre la superstructure et la plate-forme de manutention de charge comprenant un pivot (16) et un organe transversal de guidage associé (17), ledit moyen de liaison autorisant un déplacement transversal de la superstructure et/ou une rotation possible dans son plan, lesdits moyens de visée, de réglage et de liaison assurant un positionnement précis des charges transférées sans nécessité de prévoir un quelconque équipement de guidage sur le plancher du véhicule.

2. Dispositif selon la revendication 1, caractéisé par le fait que les moyens de visée comportent au moins un organe (9) émettant un rayon lumineux, de préférence un organe laser, et des oeilletons de visée avant et arrière associés (10, 11), permettant de situer la trace du rayon sur le fond (13) du véhicule.

3. Dispositif selon la revendication 2, caractérisé par le fait qu'il comporte un portique avant et arrière (7, 8), monté à chaque extrémité de la superstructure (4), et portant au voisinage de leurs angles supérieurs les moyens de visée (9, 10, 11), permettant un double repérage.

4. Dispositif selon la revendication 3, caractérisé par le fait que le portique avant (7) comporte deux rouleaux latéraux (30) d'axe essentiellement vertical, dont l'écartement est prévu pour éventuellement recentrer les charges palettisées au passage dudit portique.

5. Dispositif selon la revendication 1, caractérisé par le fait que les moyens de réglage permettant de corriger l'alignement de la superstructure (4) sont essentiellement constitués par deux vérins latéraux (18), disposés d'un côté de la superstructure, au voisinage de chaque extrémité de celle-ci.

6. Dispositif selon la revendication 5, caractérisé par le fait que le corps (19) de chaque vérin est articulé sur une semelle (21) fixée à la plate-forme de manutention de charge, l'axe d'articulation étant essentiellement vertical, la tige (20) dudit vérin étant connectée à la superstructure.

7. Dispositif selon la revendication 1, caractérisé par le fait que le pivot (16) est monté dans une zone centrale sous la superstructure -respectivement sur la plate-forme de manutention de charge-, ledit pivot pouvant se déplacer dans une cornière transversale (17) fixée sur ladite plate-forme -respectivement sous ladite superstructure-, ledit pivot assurant ainsi un blocage longitudinal tout en autorisant les degrés de liberté en translation latérale et en élévation verticale.

8. Dispositif selon la revendication 7, caractérisé par le fait que le pivot (16') est télescopique, avec un déploiement dans une direction essentiellement verticale.

9. Dispositif selon l'une des revendications 1 à 8, caractérisé par le fait qu'il comporte également des moyens de réglage (26) disposés sensiblement au niveau de la périphérie de la superstructure (4), permettant un réglage en hauteur de ladite superstructure par rapport au plancher de véhicule avec un déplacement essentiellement vertical de celle-ci par rapport à la plate-forme de manutention de charge (3).

10. Dispositif selon la revendication 9, caractérisé par le fait qu'il comporte une superstructure intermédiaire porteuse (4') disposée sous la superstructure allongée (4), et au niveau de laquelle sont répartis les points d'application des moyens de réglage en hauteur (26).

11. Dispositif selon l'une des revendications 9 et 10, caractérisé par le fait que les moyens de réglage en hauteur (26) sont des vérins hydrauliques télescopiques, ou des vérins à vis commandés électriquement.

12. Dispositif selon l'une des revendications 1 à 11, caractérisé par le fait que des moyens de verrouillage (24, 25) sont prévus au voisinage des extrémités avant de certaines au moins des dents (5) de l'ensemble mobile, permettant de relier entre elles deux extrémités adjacentes.

13. Dispositif selon la revendication 12, caractérisé par le fait que les moyens de verrouillage sont des crochets articulés (24), commandés de préférence au moyen de vérins hydrauliques (25).

14. Dispositif selon les revendications 12 et 13, caractérisé par le fait que les crochets (24) sont mobiles dans un plan essentiellement parallèle à la superstructure (4), et réalisent un verrouillage des dents par paires.

15. Dispositif selon l'une des revendications 1 à 14, caractérisé par le fait que des galets de roulement (14) sont montés sous la superstructure (4) - respectivement sur la plate-forme de manutention de charge (3)-, lesdits galets roulant sur des pistes d'appui rigides transversales (15) prévues sur ladite plate-forme -respectivement sous ladite superstructure.

16. Dispositif selon l'une des revendications 1 à 15, caractérisé par le fait qu'il comporte un hayon (29) monté pivotant à l'avant de la superstructure, servant de plateau de transition avec le plancher du véhicule.

**Patentansprüche**

1. Vorrichtung zur Überführung von Ladegut, insbesondere für die schnelle Überführung von an Bord von Straßenfahrzeugen transportiertem, palettisiertem Ladegut, mit einer länglichen Superstruktur (4), die auf einer Ladegutumschlagsrampe (3) angeordnet ist, wobei sich die Superstruktur in der allgemeinen Überführungsrichtung erstreckt und eine bewegbare Gesamtheit trägt, die eine Vielzahl von im wesentlichen zu der genannten Richtung parallelen Zähnen aufweist, wobei die genannten Zähne die schnelle Überführung des Ladeguts dank zugeordneter Rolleneinrichtungen sicherstellen, dadurch gekennzeichnet, daß sie ferner von der Superstruktur (4) getragene Visiereinrichtungen (9, 10, 11), die ermöglichen, die Ausrichtung der genannten Superstruktur in bezug auf das Fahrzeug zu kontrollieren, nahe einem jeden Ende der Superstruktur angeordnete Einstelleinrichtungen (18), die ermöglichen, die Ausrichtung der Superstruktur mit einer seitlichen Verschiebung derselben in bezug auf die Ladegutumschlagsrampe (3) zu korrigieren, und eine Verbindungseinrichtung zwischen der Superstruktur und der Ladegutumschlagsrampe umfaßt, die einen Drehzapfen (16) und ein zugeordnetes Organ (17) zur Querführung aufweist, wobei die Verbindungseinrichtung eine Querverschiebung der Superstruktur und/oder eine in ihrer Ebene mögliche Drehung zuläßt, wobei die genannten Visier-, Einstell- und Verbindungseinrichtungen eine genaue Positionierung des überführten Ladeguts ohne die Notwendigkeit sicherstellen, irgendeine Führungsausrüstung auf dem Fahrzeugboden vorzusehen.

2. Vorrichtung nach Anspruch 1, dadurch gekennzeichnet, daß die Visiereinrichtungen wenigstens ein einen Lichtstrahl aussendendes Organ (9), vorzugsweise ein Laserorgan, und vorne und hinten zugeordnete Visieraugen (10, 11) umfassen, die erlauben, die Strahlspur auf dem Hintergrund (13) des Fahrzeugs zu plazieren.

3. Vorrichtung nach Anspruch 2, dadurch gekennzeichnet, daß sie einen vorderen und einen hinteren Portalrahmen (7, 8) aufweist, der an jedem Ende der Superstruktur (4) angebracht ist und nahe seiner oberen Ecke die Visiereinrichtungen (9, 10, 11) trägt, wodurch eine doppelte Peilung möglich ist.

4. Vorrichtung nach Anspruch 3, dadurch gekennzeichnet, daß der vordere Portalrahmen (7) zwei seitliche Rollen (30) mit im wesentlichen vertikaler Achse aufweist, deren Abstand vorgesehen ist, um gegebenenfalls das palettisierte Ladegut bei seinem Durchgang durch den genannten Portalrahmen erneut zu zentrieren.

5. Vorrichtung nach Anspruch 1, dadurch gekennzeichnet, daß die Einstellmittel, die ermöglichen, die Ausrichtung der Superstruktur (4) zu korrigieren, im wesentlichen von zwei seitlichen Linearantrieben (18) gebildet sind, die auf einer Seite der Superstruktur in der Nähe von jedem Ende derselben angeordnet sind.

6. Vorrichtung nach Anspruch 5, dadurch gekennzeichnet, daß jeder Körper (19) eines jeden Linearantriebs an einer Fußplatte angelenkt ist, die auf der Ladegutumschlagsrampe befestigt ist, wobei die Gelenkachse im wesentlichen senkrecht verläuft und die Stange (20) des genannten Linearantriebs mit der Superstruktur verbunden ist.

7. Vorrichtung nach Anspruch 1, dadurch gekennzeichnet, daß der Drehzapfen (16) in einem Zentralbereich unter der Superstruktur – bzw. auf der Ladegutumschlagsrampe – angebracht ist, sich der genannte Drehzapfen in einem quer verlaufenden Winkelprofil (17) verschieben kann, welches auf der genannten Ladegutumschlagsrampe – bzw. unter der genannten Superstruktur – befestigt ist, der genannte Drehzapfen somit eine Längsblockierung sicherstellt, wobei die Freiheitsgrade zur seitlichen Verschiebung und zum vertikalen Anheben vollständig zugelassen sind.

8. Vorrichtung nach Anspruch 7, dadurch gekennzeichnet, daß der Drehzapfen (16) teleskopisch in einer im wesentlichen vertikalen Richtung erstreckbar ist.

9. Vorrichtung nach einem der Ansprüche 1–8, dadurch gekennzeichnet, daß sie auch Einstelleinrichtung (26) umfaßt, die im wesentlichen auf der Höhe der Peripherie der Superstruktur (4) angeordnet sind und eine Höheneinstellung der genannten Superstruktur in bezug auf den Fahrzeugboden mit einer im wesentlichen vertikalen Bewegung derselben in bezug auf die Ladegutumschlagsplattform (3) erlauben.

10. Vorrichtung nach Anspruch 9, dadurch gekennzeichnet, daß sie eine Zwischentragsuperstruktur (4') aufweist, die unter der länglichen Superstruktur (4) angeordnet ist und auf deren Höhe die Ansatzpunkte für die Höheneinstelleinrichtungen (26) verteilt sind.

11. Vorrichtung nach einem der Ansprüche 9 und 10, dadurch gekennzeichnet, daß die Höheneinstelleinrichtungen (26) hydraulische Teleskoplinearantriebe oder elektrisch gesteuerte Schraubenlinearantriebe sind.

12. Vorrichtung nach einem der Ansprüche 1–11, dadurch gekennzeichnet, daß nahe den vorderen Enden zumindest gewisser Zähne (5) der bewegbaren Gesamtheit Verriegelungseinrichtungen (24, 25) vorgesehen sind, die ermöglichen, zwei benachbarte Enden miteinander zu verbinden.

13. Vorrichtung nach Anspruch 12, dadurch gekennzeichnet, daß die Verriegelungseinrichtungen angelenkte Haken (24) sind, die vorzugsweise mittels hydraulischer Linearantriebe (24) gesteuert sind.

14. Vorrichtung nach Anspruch 12 und 13, dadurch gekennzeichnet, daß die Haken (24) in einer im wesentlichen zu der Superstruktur (4) parallelen Ebene bewegbar sind und eine paarweise Verriegelung der Zähne durchführen.

15. Vorrichtung nach einem der Ansprüche 1–14, dadurch gekennzeichnet, daß Transportrollen (14) unter der Superstruktur (4) – bzw. auf der Ladegutumschlagsrampe (3) – angebracht sind, die genannten Transportrollen auf festen, quer verlaufenden Stützbahnen (15) rollen, die auf der genannten Rampe – bzw. unter der genannten Superstruktur – vorgesehen sind.

16. Vorrichtung nach einem der Ansprüche 1–15, dadurch gekennzeichnet, daß sie eine Ladeklappe (29) aufweist, die verschwenkbar vor der Superstruktur angebracht ist, und als Überbrückungsplatte mit dem Boden des Fahrzeugs dient.

## Claims

1. A load transfer device, especially for the rapid transfer of palletized loads transported on road vehicles, comprising an elongate superstructure (4) arranged on a load-handling platform (3), said superstructure extending in the general direction of transfer and supporting a mobile assembly with a plurality of teeth substantially parallel to said direction, said teeth ensuring rapid transfer of the load owing to associated rolling means, characterized in that it also comprises aiming means (9, 10, 11) carried by the superstructure (4) and allowing alignment of said superstructure with respect to the vehicle to be controlled, regulating means (18) arranged in the vicinity of each end of the superstructure and allowing correction of the alignment of said superstructure by lateral displacement thereof with respect to the load-handling platform (3), and means of connecting the superstructure to the load-handling platform comprising a pivot (16) and an associated transverse guiding member (17), said connecting means permitting transverse displacement of the superstructure and/or possible rotation within its plane, said aiming, regulating and connecting means ensuring precise positioning of the loads transferred without the need for any guiding equipment to be provided on the floor of the vehicle.

2. A device according to claim 1, characterized in that the aiming means comprise at least one member (9) emitting a light beam, preferably a laser member, and associated front and rear optical pieces (10, 11), allowing locating of the beam path on the rear (13) of the vehicle.

3. A device according to claim 2, characterized in that it comprises front and rear portals (7, 8) mounted at each end of the superstructure (4) and carrying the aiming means (9, 10, 11) in the vicinity of their upper corners, allowing double position finding.

4. A device according to claim 3, characterized in that the front portal (7) comprises two lateral rollers (30) with substantially vertical axes, the separation of which rollers is provided for the possible re-centring of the palletized loads on their passage through said portal.

5. A device according to claim 1, characterized in that the regulating means allowing correction of the alignment of the superstructure (4) consist essentially of two lateral jacks (18) arranged on one side of the superstructure in the vicinity of each end thereof.

6. A device according to claim 5, characterized in that the body (19) of each hack is articulated to a bearing plate (21) fixed to the load-handling platform, the axis of articulation being substantially vertical and the rod (20) of said jack being connected to the superstructure.

7. A device according to claim 1, characterized in that the pivot (16) is mounted in a central zone under the superstructure, or alternatively on the load-handling platform, said pivot being capable of moving in a transverse angle iron (17) fixed onto said platform or under said superstructure respectively, said pivot thereby ensuring longitudinal blocking while permitting the degrees of freedom of lateral displacement and vertical elevation.

8. A device according to claim 7, characterized in that the pivot (16') is telescopic and extends in a substantially vertical direction.

9. A device according to any one of claims 1 to 8, characterized in that it also comprises regulating means (26) arranged substantially at the level of the periphery of the superstructure (4) and allowing height regulation of said superstructure with respect to the vehicle floor by substantially vertical displacement of the superstructure with respect to the load-handling platform (3).

10. A device according to claim 9, characterized in that it comprises an intermediate bearing superstructure (4') arranged under the elongate superstructure (4) and on which are distributed application points for the height regulating means (26).

11. A device according to claim 9 or claim 10, characterized in that the height regulating means (26) are telescopic hydraulic jacks, or electrically controlled screw jacks.

12. A device according to any one of claims 1 to 11, characterized in that locking means (24, 25) are provided in the vicinity of the front ends of certain at least of the teeth (5) of the mobile assembly, allowing two adjacent ends to be connected together.

13. A device according to claim 12, characterized in that the locking means are articulated hooks (24), preferably controlled by means of hydraulic jacks (25).

14. A device according to claim 12 or claim 13, characterized in that the hooks (24) are mobile in a plane substantially parallel to the superstructure (4) and effect locking of the teeth in pairs.

15. A device according to any one of claims 1 to 14, characterized in that rollers (14) are mounted under the superstructure (4), or alternatively on the load-handling platform (3), said rollers rolling on rigid transverse bearing tracks (15) provided on said platform or under said superstructure, respectively.

16. A device according to any one of claims 1 to 15, characterized in that it comprises an end gate (29) mounted pivotally at the front of the superstructure, serving as a platform for transition to the vehicle floor.

FIG.2

FIG.1

FIG_3

EP 0 233 098 B1

FIG.4

FIG.6a

FIG.6b

FIG.6c

FIG.5

FIG.9

FIG.10

## FIG.7

## FIG.8

EP 0 233 098 B1